# EUROPÄISCHE PATENTSCHRIFT

(11) **EP 1 813 149 B1**
(45) Veröffentlichungstag und Bekanntmachung des Hinweises auf die Patenterteilung: **21.07.2010**
(21) Anmeldenummer: 07001789.2
(22) Anmeldetag: 26.01.2007
(51) Int. Cl.: A01K 85/00

(54) **Künstlicher Angelköder vom Typ Metallkopf**
Jighead-type fishing lure
Leurre de pêche du genre tête plombée

(30) Priorität: 27.01.2006 DE 102006003879
(43) Veröffentlichungstag der Anmeldung: 01.08.2007
(73) Patentinhaber: Dapoz, Volker, 15324 Letschin (DE)
(72) Erfinder: Dapoz, Volker, 15324 Letschin (DE)
(74) Vertreter: Bittner, Thomas L.

(56) Entgegenhaltungen:
- FR-A- 2 861 256
- JP-A- 11 146 746
- JP-A- 2002 065 114
- US-A- 2 582 646
- US-A- 4 796 376
- US-A- 4 848 023

## Beschreibung

Die Erfindung betrifft einen künstlichen Angelköder vom Typ Metallkopf.

### Hintergrund der Erfindung

Künstliche Angelköder werden beim Angeln verwendet, um Beutefische oder sonstige Beute zu imitieren. Es werden verschiedene Arten von künstlichen Angelködern unterschieden, die hinsichtlich ihrer konstruktiven Gestaltung für jeweils unterschiedliche Anwendungszwecke angepasst sind. Grundsätzliche Unterschiede bestehen üblicherweise zwischen künstlichen Angelködern für das Meeresangeln und das Süßwasserangeln, wegen der unterschiedlichen Bedingungen, beispielsweise hinsichtlich der Gewässertiefe. Bei der Verwendung künstlicher Angelköder besteht das Ziel allgemein darin, einen Beutefisch zu imitieren, insbesondere dessen Bewegungen im Wasser. Aufgrund der voneinander abweichenden Bedingungen in den Gewässern und der verschiedenen Arten der zu fangenden Fische, kann dieses Ziel jedoch nur mit sehr unterschiedlich gestalteten Angelködern erreicht werden.

Künstliche Angelköder vom Typ Metallkopf finden nicht nur Anwendung beim Meeresangeln, weisen zu diesem Zweck jedoch einen kompakten Körper aus Metall auf. Metallköpfe finden insbesondere Verwendung zur Schaffung eines Kombinationsköders, wobei der Metallkopf im Wesentlichen zur erforderlichen Beschwerung, zur Befestigung an der Angelschnur sowie zur Fixierung eines Köders anders gearteter Konsistenz dient. Der Metallkopf ist damit Teil des gesamten Kombinationsköders, die Hauptausgestaltung hinsichtlich der Imitation von Beute liegt aber in der Regel beim anzubringenden Zusatzangelköder. Selten wird der Metallkopf als Alleinköder eingesetzt. Der Metallkopf stellt damit das Sekundärelement des gesamten Kombinationsköders dar, der Zusatzangelköder das Primärelement. Der Metallkopf verfügt deshalb über wenigstens zwei Befestigungselemente, wobei eines der Befestigungselemente zur Verbindung mit der Angelschnur und wenigstens ein weiteres Befestigungselement zum Anbringen eines Hakens, wobei das zweite Befestigungselement selber ein fest eingefügter Haken, eine Öse oder auch eine Drahtvorrichtung sein kann. An diesem Befestigungselement wird dann der Primärköder befestigt. Primärköder können sein Körper aus natürlichen oder künstlichen Stoffen, die Beute oder Beutefische imitieren, sowie echte Beutefische oder Teile davon. Ein solcher Metallkopf soll nach dem Auswerfen aufgrund seines Eigengewichtes zügig absinken und muss deshalb aus Materialien mit einem hohen spezifischen Gewicht bestehen, um in die üblichen Wassertiefen und den dort befindlichen Fischen zu gelangen. Metallköpfe sind daher üblicherweise aus Metallen wie Blei, Zink, Messing oder Edelstahl gefertigt, mindestens aber ein Kunststoff mit Metallkombination. Der Kombinationsköder aus Metallkopf und Primärköder bestehend wird nach dem Absinken mittels der Angelrute und durch Einholen und Nachlassen der Angelschnur in der Form bewegt, die die natürliche Bewegung imitiert. Auch der Metallkopf als Sekundärelement kann zur besseren Imitation oder zur Erhöhung von Reizwirkungen über eine reflektierende oder fluoreszierende Oberfläche verzügen, kann weitere Haltevorrichtungen für selbst leuchtende Utensilien aufweisen, kann Rasselgeräusche erzeugen und durch Variation der Formgebung modifizierte Strömungseigenschaften erhalten. Bekannte Kombinationsköder verleiten Raubfische mittels eines oder mehrerer Reize zum Anbiss, die optischer und/oder akustischer Natur sind oder aufgrund von Variationen des Angelköders entstehen. Allerdings ist ein wesentliches Merkmal von Kombinationsködern der Bewegungsreiz/Geruchsreiz, insbesondere deshalb, weil in größeren Wassertiefen sowie in unreinen Gewässern, kaum noch Licht vorhanden ist, wodurch das Erzeugen von optischen Bissreizen kaum möglich ist, und die Fische hauptsächlich auf Schwingungen/Wellen sowie auf Botenstoffe reagieren.

US 2,582,646 A offenbart einen Angelköder mit einem lang gestreckten Körper und einer am distalen Ende des langgestreckten Körpers gebildeten Haken-Befestigungseinrichtung. Eine Schnur-Befestigungseinrichtung für eine Angelschnur ist in einem vorderen Bereich des langgestreckten Körpers gebildet.

JP 2002-065114 A zeigt einen Angelköder mit einem Fischkopf ähnlichen Körper. Eine Schnur-Befestigungseinrichtung für eine Angelschnur ist in einem vorderen Bereich des Körpers angeordnet.

In US 4,796,376 A ist ein Angelköder mit einem lang gestreckten Körper und zwei Haken-Befestigungseinrichtungen für einen Angelhaken beschrieben. Eine Schnur-Befestigungseinrichtung für eine Angelschnur ist in einem vorderen Bereich des lang gestreckten Körpers angeordnet.

Aus FR 2 861 256 A geht ein Angelköder mit einem Körper und einer Verlängerung in Form einer lang gestreckten Öse hervor, auf welcher ein Primärköder gesteckt ist.

US 4,848,023 A beschreibt einen Angelköder mit einem Körper und einer Aufnahmevorrichtung für einen Primärköder.

JP 11-146746 A zeigt einen Angelköder mit einem Fisch ähnlichen Metallrahmen für Fisch ähnliche Einsätze.

### Zusammenfassung der Erfindung

Aufgabe der Erfindung ist es, einen verbesserten Angelköder vom Typ Metallkopf zur Verfügung zu stellen, bei dem eine Verwendung von universellen Primärködern erreicht werden soll, eine Verbesserung der Anbringmöglichkeiten der Primärköder sowie eine gleichlaufende Erhöhung der Fangchancen und Erweiterung des Einsatzbereiches.

Diese Aufgabe wird erfindungsgemäß durch einen Angelköder vom Typ Metallkopf nach dem unabhängigen Anspruch 1 gelöst. Vorteilhafte Ausgestaltungen der Erfindung sind Gegenstand von abhängigen Unteransprüchen.

Die Erfindung umfasst den Gedanken, einen künstlichen Angelköder vom Typ Metallkopf bereitzustellen, mit einem Körper aus metallischem Material oder einem Material mit hohem Metallanteil, einer Schnur-Befestigungseinrichtung für eine Angelschnur auf dem Rücken des Körpers, einer an dem Körper gebildeten Aufnahmevorrichtung zum Aufnehmen eines Primärköders in einem Aufnahmeraum, wobei die Aufnahmevorrichtung derart konfiguriert ist, daß der Primärköder sicher von der Aufnahmevorrichtung gehalten ist, einer an dem Körper rückseitig gebildeten Verlängerung, die konfiguriert ist, den Primärköder in dem Aufnahmebereich zu stabilisieren und einer am distalen Ende der Verlängerung gebildeten Haken-Befestigungseinrichtung, welche konfiguriert ist, einen Haken austauschbar und frei beweglich aufzunehmen.

Ein wesentlicher Vorteil, welcher mit der Erfindung gegenüber dem Stand der Technik erreicht wird, besteht darin, dass aufgrund der Anordnung der Haken-Befestigungseinrichtung die Anbringung von Primärködern wesentlich erleichtert wird, unterschiedlich ausgestaltete Primärköder haltbar angebracht werden können und die angebrachten/anzubringenden Angelhaken bei Verschleiß einfacher ausgetauscht werden können, sowie eine der jeweiligen Situation angepasste Wahl der Angelhaken möglich macht. Darüber hinaus kann die Größe der zu benutzenden Angelhaken frei gewählt werden und aufgrund der möglichen Benutzung von Mehrfachhaken (Drillingen, Dreifachhaken), die zudem frei beweglich angebracht sind, werden die Fangchancen erheblich gesteigert. Bei bekannten Metallköpfen werden die Anbringung sowie der Fang von Fischen mittels eines Einzelhakens ausgeführt, der überdies fest im Metallkopf verankert ist und deshalb nicht separat ausgetauscht werden kann. Bei Abnutzung bleibt daher meist nur der Austausch des gesamten Metallkopfes. Die Anbringung von Mehrfachhaken (Drilling) muß bei herkömmlichen Metallköpfen umständlich durch zusätzliche Einrichtungen erfolgen, etwa mittels Drahtschlingen, die aber auch dann lediglich die Fangchancen steigern, nicht jedoch dem Primärköder zusätzlichen Halt verleihen. Durch den nicht vorhandenen Haltecharakter der Zusatzhaken können bei herkömmlichen Metallköpfen die zu verwendenden Primärköder nicht frei gewählt werden, es ist notwendig, stark angepasste Primärköder zu verwenden.

Insbesondere die Einsetzbarkeit von universellen Primärködern, die in der Regel nicht über das notwendige Eigengewicht, andererseits aber über ausgeprägte Reize für Raubfische verfügen, macht die außergewöhnliche Wirkung des erfindungsgemäßen Angelköders aus. Die Vorteile entfalten sich im Bereich der Sportfischerei als auch im Bereich der Berufsfischerei.

Bei dem metallischen Material handelt es sich um ein Metall oder eine Mischung von Metallen, auch metallische Legierungen können verwendet werden. Es kann auch eine Kunststoff-Metall Variante vorgesehen sein, wobei es sich um eine mit Metall versetzte Mischung von Kunststoff handeln kann oder ein Kunststoffkörper mit Metallkern.

Bei einer vorteilhaften Ausgestaltung der Erfindung kann eine von der Schnur-Befestigungseinrichtung beabstandete, zusätzliche Schnur-Befestigungseinrichtung für eine Angelschnur auf dem Rücken des Körpers vorgesehen sein. Dadurch ergibt sich der Vorteil, daß sich der Einsatzbereich des Angelköders erweitert. Beispielsweise kann der Köder von einem sich bewegenden Wasserfahrzeug zum Angeln eingesetzt werden, was im Umgangssprachlichen als Schleppfischerei oder Trolling bezeichnet wird.

Eine bevorzugte Ausgestaltung der Erfindung kann vorsehen, daß die Verlängerung sich seitlich längs des Aufnahmebereichs für den Primärköder erstreckt. Dadurch ergibt sich eine verstärkte mechanische Stabilisierung des Primärköders, indem die Verlängerung Bewegungen des Primärköders in Richtung des Rückens weitestgehend vermeidet.

Weiterhin kann eine weitere Ausgestaltung der Erfindung vorsehen, daß die Verlängerung sich durch den Aufnahmebereich für den Primärköder erstreckt. Dadurch wird der Primärköder nicht nur durch die Aufnahmevorrichtung aufgenommen, sondern auch durch die Verlängerung und erhält somit eine verstärkte mechanische Stabilisierung.

Eine bevorzugte Ausgestaltung der Erfindung kann vorsehen, daß eine zusätzliche Haken-Befestigungseinrichtung an dem Angelköder angeordnet ist, wahlweise an einem unteren Ende des Körpers oder an einer Seite des Körpers oder an der Verlängerung. Dadurch ergibt sich die Möglichkeit einen zusätzlichen Haken an dem Angelköder anzubringen, wodurch die Fangchancen gesteigert werden können.

In einer vorteilhaften Ausgestaltung der Erfindung kann vorgesehen sein, daß die Haken-Befestigungseinrichtung und / oder die zusätzliche Haken-Befestigungseinrichtung als eine Öse gebildet ist, wahlweise als eine lang gestreckte Öse. Somit können Haken auf eine besonders einfache und flexible Weise an dem Angelköder frei beweglich angeordnet werden.

In einer vorteilhaften Ausgestaltung der Erfindung ist die Verlängerung als eine Fortsetzung des Körpers gebildet. Daraus ergibt sich der Vorteil eines besonders stabilen Angelköders, was insbesondere bei schweren Fischen vorteilhaft ist.

Eine bevorzugte Ausgestaltung kann vorsehen, daß die Fortsetzung den Rücken des Körpers vorteilhaft verlängert, in dem sich die Fortsetzung seitlich des Aufnahmebereichs für den Primärköder erstreckt. Der Primärköder ist durch den so verlängerten Rücken in einer Bewegung in Richtung des Rückens des Körpers eingeschränkt, wodurch der Primärköder verstärkt stabilisiert wird.

Bei einer anderen bevorzugten Ausgestaltung erstreckt sich die Fortsetzung durch den Aufnahmebereich für den Primärköder, wodurch die Aufnahmevorrichtung für den Primärköder gebildet wird. Die Fortsetzung verlängert somit in vorteilhafter Weise den Körper in rückseitger Richtung. Zweckmäßig kann es vorgesehen sein, daß der Durchmesser der Fortsetzung gegenüber der Fläche der Rückseite geringer ist. Somit wird beispielsweise ein mittiger Bereich der Rückseite verlängert. Dadurch ergibt sich der Vorteil einer besonders mechanisch stabilen Aufnahmevorrichtung.

In einer vorteilhaften Ausgestaltung ist die Verlängerung als eine lang gestreckte Öse gebildet und bildet somit die Haken-Befestigungseinrichtung. Insbesondere kann vorgesehen sein, daß sich die als lang gestreckte Öse gebildete Verlängerung durch den Aufnahmebereich für den Primärköder erstreckt und somit eine zusätzliche Aufnahmevorrichtung für den Primärköder bildet. Beispielsweise kann die Aufnahmevorrichtung durch einen an der Rückseite des Körpers angeordneten Haken gebildet sein, der sich in einem Bereich längs der lang gestreckten Öse erstreckt. Beispielsweise kann ein speziell geformter Draht einstückig sowohl die Aufnahmevorrichtung als auch die als lang gestreckte Öse gebildete Verlängerung bilden.

Weiterhin kann die Erfindung vorsehen, an die Haken-Befestigungseinrichtung oder an die zusätzliche Haken-Befestigungseinrichtung einen jeweiligen Angelhaken, insbesondere einen Drilling, beweglich anzuordnen, so daß zumindest ein Haken des jeweiligen Drillings in dem Primärköder verankert wird. Dadurch ergibt sich in vorteilhafter Weise ein zusätzlicher Halt für den Primärköder.

Weiterhin kann vorgesehen sein, daß die äußere Form des Körpers einem Fischkopf ähnlich gebildet ist, so daß in Verbindung mit einem Primärköder die äußere Form des künstlichen Angelköders als eine einem Fisch ähnliche Form gebildet ist.

In einer vorteilhaften Ausgestaltung der Erfindung kann vorgesehen sein, daß sich die Form des Körpers in Rücken-Richtung hin verjüngt.

### Beschreibung bevorzugter Ausführungsbeispiele der Erfindung

Die Erfindung wird im folgenden anhand von Ausführungsbeispielen unter Bezugnahme auf Figuren einer Zeichnung näher erläutert. Hierbei zeigen:
- Fig.: 1 einen künstlichen Angelköder vom Typ Metallkopf in Seitenansicht in einer bevorzugten Ausgestaltung,
- Fig. 2: eine Schnittdarstellung des künstlichen Angelköders aus Fig. 1 entlang einer Linie A - A' in Fig. 1,
- Fig. 3: den künstlichen Angelköder vom Typ Metallkopf aus Fig. 1 mit einem Primärköder,
- Fig. 4: einen künstlichen Angelköder vom Typ Metallkopf in Seitenansicht in einer vorteilhaften Ausgestaltung.
- Fig. 5: den künstlichen Angelköder vom Typ Metallkopf aus Fig. 4 mit einem Primärköder.

Gleiche Merkmale werden im folgenden mit gleichen Bezugszeichen gekennzeichnet.

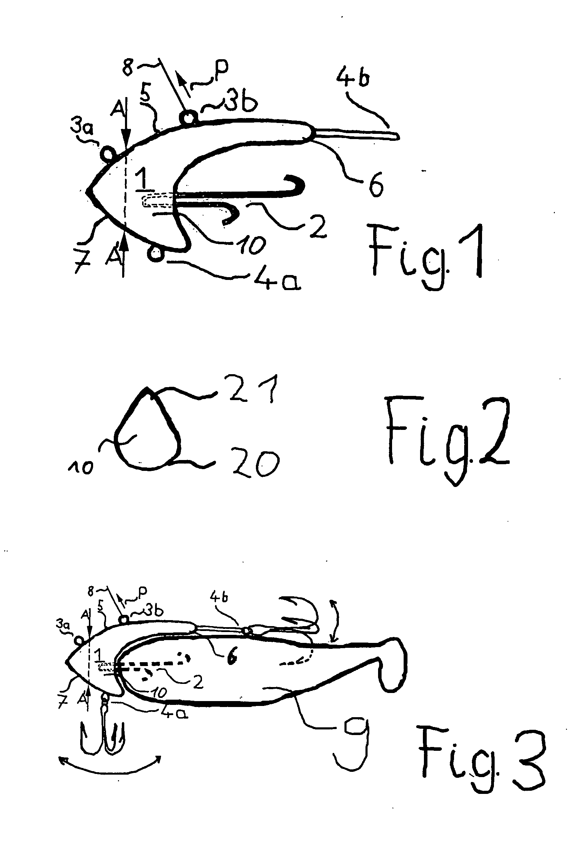

Fig. 1 zeigt einen künstlichen Angelköder 1 vom Typ Metallkopf. Der Angelköder 1 weist einen Körper 10 auf, der zur Aufnahme eines Primärköders 9 (siehe Fig. 3) derart gestaltet ist, dass in Zusammensetzung eine Fischähnlichkeit entsteht. Er besteht aus einem Metall, einer Metallegierung oder einer Kombination hiervon. In Ausnahmefällen ist die Metall-Kunststoff Kombination zweckentsprechend ausführbar. Optional kann der Angelköder 1 eine den optischen Reiz verstärkende Oberfläche in Form einer reflektierenden Oberfläche und/oder einer Oberflächenstrukturierung in Form einer Schuppung oder mit einer oder mehrerer sensorisch angepaßter Farb- sowie Motivgebung (bspw. Leuchtfolie) versehen sein, was in Fig. 1 nicht dargestellt ist. Ebenso nicht dargestellt sind etwaige Zusatzeinrichtungen wie eine Schaufelerweiterung zur Veränderung der Dynamik, eine Rassel, um zusätzliche akustische Anreize zu schaffen oder eigenaktive Lichtquellen, wie Leuchtdioden.

Ausgestaltet ist der Angelköder 1 in der Fig. 1 mit einer im Wesentlichen glatten Wölbung an der Oberseite, wo ein konvex gekrümmter Rücken 5 des Körpers 10 gebildet wird. An der Rückseite des Körpers 10 ist eine sich seitlich eines Aufnahmebereichs für den Primärköder 9 erstreckende Verlängerung 6 angeordnet. An dem distalen Ende der Verlängerung 6 ist eine Haken-Befestigungseinrichtung 4b gebildet. Die Verlängerung 6 bildet eine Fortsetzung mit dem Körper 10. Die äußere Form der Verlängerung 6 verjüngt sich zum distalen Ende hin. Dadurch verlängert sich in vorteilhafter Weise der Rücken 5 des Körpers 10. Die Verlängerung 6 kann aber auch eine eingefügte Verlängerung sein, wahlweise aus einem von dem Material des Metallkopfes abweichenden Materials, beispielsweise ein Metalldraht.

An dem Metallkopf ist eine zusätzliche Haken-Befestigungseinrichtungen 4a für Angelhaken auf einer Unterseite 7 des Körpers 10 und zwei (oder mehr) von einander beabstandete Schnur-Befestigungseinrichtungen 3a, 3b für eine Angelschnur 8 auf dem Rücken 5 des Körpers 10 angeordnet. Ein Pfeil P kennzeichnet die Zugrichtung P bei der Nutzung des Angelköders 1, die wesentlich mittels der Anordnung der Schnur-Befestigungseinrichtung 3b auf dem Rücken 5 festgelegt ist. Hierdurch ergibt sich auch der Neigungswinkel des Gesamtköders (Angelköder 1 plus Primärköder 9, Fig. 3) im Wasser.

Eine Aufnahmevorrichtung 2 für den Primärköder 9 ist an der Rückseite des Körpers 10 gebildet und erstreckt sich durch den Aufnahmebereich für den Primärköder. Die Aufnahmevorrichtung 2 wird aus einem Stück mittels eines speziell gebogenen Drahts gebildet, der fest in den Metallkopf eingefügt ist und erfindungsgemäß einen sicheren Halt für den Primärköder 9 bietet, wobei sich der speziell gebogene Draht nicht nur auf das Ausführungsbeispiel aus der Fig. 1 beschränken soll. Optional kann die Aufnahmevorrichtung 2 als ein loser oder fest angebrachter Haken, ein geeigneter Dorn oder ein anders geformter Draht mit Widerhaken, Borsten oder ähnlichen Ausprägungen, die die funktionale Aufgabe haben, den anzubringenden Primärköder 9 aufzunehmen, gebildet sein.

Die Fig. 2 zeigt eine Schnittdarstellung des künstlichen Metallkopfes entlang einer Linie A - A' in Fig. 1. Querschnittsflächen des Körpers 10 entlang einer Längsrichtung des Körpers 10 sind zu einem unteren Abschnitt 20 hin verjüngend gebildet. Aus der Fig. 2 ergibt sich weiter, dass eine Massehäufung in dem unteren Abschnitt 20 vorliegt, um eine Stellung des Gesamtköders im Wasser derart zu realisieren, dass der Gesamtköder auch bei Bewegung durch das Wasser größtenteils seine aufrechte Lage behält. Wahlweise kann die Querschnittsfläche elliptisch sein. Unvorteilhaft ist jedoch eine Massehäufung in einem oberen Bereich 21, weil der Gesamtköder dadurch vermehrt zum Kippen neigt, was bei der praktischen Anwendung zu einer unerwünschten Anordnung (Verhedderung) zwischen der Angelschnur 8, dem Primärköder 9 und dem Metallkopf führen kann. Beim vorliegenden Ausführungsbeispiel wird das weitgehend vermieden.

Die Fig. 3 zeigt den künstlichen Angelköder 1 vom Typ Metallkopf aus der Fig. 1. mit dem Primärköder 9. An der Haken-Befestigungseinrichtung 4b und der zusätzlichen Haken-Befestigungseinrichtung 4a sind jeweils Drillinge frei beweglich aufgenommen (symbolisiert durch die Doppelpfeile). Die jeweiligen Drillinge können einen Doppelzweck erfüllen. Sie bilden, über ihren Hauptzweck (dem möglichst sicheren Halt der zu fangenden Fische) hinaus, eine zusätzliche Befestigungsmöglichkeit für den Primärköder 9, wenn sie in dem Primärköder 9 verankert sind. Der Primärköder 9 ist aufgrund seiner Lockwirkung wesentlich größeren Belastungen ausgesetzt und weiterhin aufgrund seiner materiellen Beschaffenheit hohen Abnutzungseffekten ausgesetzt. Die im Ausführungsbeispiel gezeigte Anordnung der Haken erhöht nicht nur die Erfolgsquote, sondern bietet dem Primärköder 9 neben der Aufnahmevorrichtung 2 zusätzlichen Halt. Die Lebensdauer des Primärköders 9 und die Wirkung des Gesamtköders erhöhen sich damit entscheidend.

Die im vorderen Bereich des Rückens 5 angeordneten Schnur-Befestigungseinrichtungen 3a, 3b erweitern den Einsatzbereich des Angelköders 1. Je nach Anwendungsbereich können optional weitere Schnur-Befestigungseinrichtungen im vorderen Rückenbereich 5 des Angelköders 1 vorgesehen sein. Durch die verschiedenen Möglichkeiten der Schnurbefestigung erhält der Angelköder 1 einen größeren Einsatzbereich und kann etwa auch von sich bewegenden Wasserfahrzeugen aus eingesetzt werden kann, welches im Umgangssprachlichen als Schleppfischerei oder Trolling bezeichnet wird. Bei dieser Art der Anwendung wird der Köder nicht durch Einholen und Nachlassen der Angelschnur in der Form bewegt, die die natürliche Bewegung imitiert, sondern der Angelköder 1 wird vom fahrenden Boot gezogen. Auch dieser Einsatzfall, der eine abweichende Dynamik des Angelköders 1 erfordert, kann durch eine alternative Positionierung der Schnur-Hefestigungseinrichtung 3a, 3b auf dem Rücken 5 des Angelköders 1 realisiert werden. Bei konventionellen Metallköpfen ist üblicherweise nur eine Schnur-Befestigungseinrichtung vorgesehen, die überdies eine Einheit mit dem Haken bildet, das heißt ein Haken, der mit einer. Schnur-Befestigungseinrichtung versehen ist, wird komplett in den Metallkopf eingefügt.

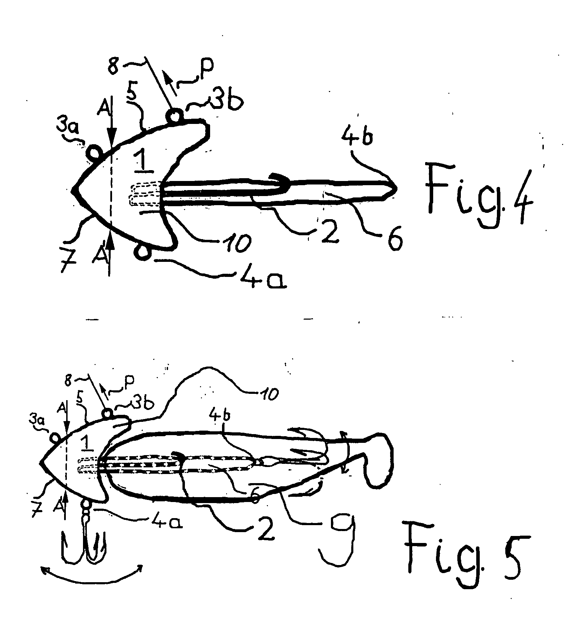

Fig. 4 zeigt einen künstlichen Angelköder 1 vom Typ Metallkopf in Seitenansicht in einer vorteilhaften Ausgestaltung. Der Angelköder 1 umfaßt einen Körper 10, dessen äußere Form als einem Fischkopf ähnlich gebildet ist. Auf dem Rücken 5 des Körpers 10 sind zwei von einander beabstandete Schnur-Befestigungseinrichtungen 3a, 3b für die Angelschnur 8 angeordnet, die als Ösen gebildet sind. Ein Pfeil P kennzeichnet die Zugrichtung der Angelschnur 8. Ein speziell geformter an der Rückseite des Körpers 10 angeordneter Draht bildet einstükkig sowohl die Aufnahmevorrichtung 2 als auch die Verlängerung 6, wobei die Idee, die Aufnahmevorrichtung 2 und die Verlängerung 6 einstückig aus einem speziell geformten Draht zu bilden, sich nicht nur auf das Ausführungsbeispiel aus der Fig. 4 beschränken soll. Die Aufnahmevorrichtung 2 ist als ein hakenförmiger Draht gebildet und erstreckt sich durch den Aufnahmebereich für den Primärköder 9. Die Verlängerung 6 ist in diesem Ausführungsbeispiel als eine lang gestreckte Öse gebildet und erstreckt sich durch den Aufnahmeraum für den Primärköder 9. Die als lang gestreckte Öse gebildete Verlängerung 6 bildet die Haken-Befestigungseinrichtung 4b. An dem unteren Ende 7 des Körpers 10 ist die zusätzliche Haken-Befestigungseinrichtung 4a angeordnet. Allerdings ist es nicht zwingend, daß die zusätzliche Haken-Befestigungseinrichtung 4a an dem unteren Ende des Körpers 10 angeordnet ist. Insbesondere kann sie auch an einer Seite des Körpers 10 angeordnet sein (nicht gezeigt). Beispielsweise kann so weitestgehend vermieden werden, daß ein an der zusätzlichen Haken-Befestigungseinrichtung 4a angeordneter Haken beim Angeln nicht über den Gewässergrund schleift und sich somit nicht mit Pflanzen, Steinen oder sonstigem verhakt.

Die Fig. 5 zeigt den künstlichen Angelköder 1 vom Typ Metallkopf aus der Fig. 4 mit dem Primärköder 9. An der Haken-Befestigungseinrichtung 4b und der zusätzlichen Haken-Befestigungseinrichtung 4a sind jeweils Drillinge frei beweglich aufgenommen (symbolisiert durch die Doppelpfeile). Die jeweiligen Drillinge können einen Doppelzweck erfüllen. Sie bilden, über ihren Hauptzweck (dem möglichst sicheren Halt der zu fangenden Fische) hinaus, eine zusätzliche Befestigungsmöglichkeit für den Primärköder 9, wenn sie in dem Primärköder 9 verankert sind.

In diesem Ausführungsbeispiel wird der Primärköder 9 durch die Verlängerung 6 und durch die Aufnahmevorrichtung 2 aufgenommen, wodurch der Primärköder 9 zusätzlich mechanisch stabilisiert wird. Die Lebensdauer des Primärköders erhöht sich damit entscheidend.

Die im vorderen Bereich des Rückens 5 angeordneten Schnur-Befestigungseinrichtungen 3a, 3b erweitern den Einsatzbereich des Angelköders 1 in der gleichen Art und Weise wie weiter oben für das Ausfiffimngsbeispiel aus der Fig. 3 beschrieben.

## Patentansprüche

1. Künstlicher Angelköder (1) vom Typ Metallkopf, mit:
- einem Körper (10) aus einem metallischen Material oder einem Material mit hohem Metallanteil,
- einer Schnur-Befestigungseinrichtung (3a; 3b) für eine Angelschnur (8) auf dem Rücken (5) des Körpers (10),
- einer an dem Körper (10) rückseitig gebildeten Verlängerung (6), die konfiguriert ist, einen Primärköder (9) in einem Aufnahmebereich zu stabilisieren, und
- einer am distalen Ende der Verlängerung (6) gebildeten Haken-Befestigungseinrichtung (4b), welche konfiguriert ist, einen Haken austauschbar und frei beweglich aufzunehmen, **gekennzeichnet durch**
- einer an dem Körper (10) gebildeten Aufnahmevorrichtung (2) zum Aufnehmen des Primärköders (9) in dem Aufnahmebereich, wobei die Aufnahmevorrichtung (2) konfiguriert ist, den Primärköder (9) sicher an dem Körper (10) zu halten.

2. Künstlicher Angelköder (1) nach Anspruch 1, **dadurch gekennzeichnet, daß** auf dem Rücken (5) des Körpers (10) zumindest eine von der Schnur-Befestigungseinrichtung (3b) beabstandete, zusätzliche Schnur-Befestigungseinrichtung (3a) für die Angelschnur (8) angeordnet ist.

3. Künstlicher Angelköder (1) nach Anspruch 1 oder 2, **dadurch gekennzeichnet, daß** die Verlängerung (6) sich seitlich längs des Aufnahmebereichs für den Primärköder (9) erstreckt.

4. Künstlicher Angelköder (1) nach Anspruch 1 oder 2, **dadurch gekennzeichnet, daß** sich die Verlängerung (6) durch den Aufnahmebereich für den Primärköder (9) erstreckt.

5. Künstlicher Angelköder (1) nach einem der vorangehenden Ansprüche, **dadurch gekennzeichnet, daß** die Haken-Befestigungseinrichtung (4b) als eine lang gestreckte Öse gebildet ist.

6. Künstlicher Angelköder (1) nach einem der vorangehenden Ansprüche, **gekennzeichnet durch** eine zusätzliche Haken-Befestigungseinrichtung (4a).

7. Künstlicher Angelköder (1) nach einem der vorangehenden Ansprüche, **dadurch gekennzeichnet, daß** die Verlängerung (6) als Fortsetzung des Körpers (10) gebildet ist.

8. Künstlicher Angelköder (1) nach einem der vorangehenden Ansprüche, **dadurch gekennzeichnet, daß** Querschnittsflächen entlang einer Längsrichtung des Körpers (10) einen (infinitesimalen) Massemittelpunkt in der unteren Hälfte haben.

9. Künstlicher Angelköder (1) nach einem der vorangehenden Ansprüche, **dadurch gekennzeichnet, daß** der Körper (10) im Bereich des Rückens (5) eine konvexe Krümmung aufweist.

10. Künstlicher Angelköder (1) nach einem der vorangehenden Ansprüche, **dadurch gekennzeichnet, daß** der Körper (10) zumindest teilweise eine Oberflächenbeschichtung aufweist zum Ausbilden eines optischen, eines geschmacklichen und/oder eines akustischen Bissreizes und/oder eines Geruchsreizes.

11. Künstlicher Angelköder (1) nach einem der vorangehenden Ansprüche, **dadurch gekennzeichnet, daß** der Körper (10) über zusätzliche, die hydrodynamischen Eigenschaften verändernde Ausprägungen verfügt.

12. Künstlicher Angelköder (1) nach einem der vorangehenden Ansprüche, **dadurch gekennzeichnet, daß** an dem Körper (10) zumindest eine von der Aufnahmevorrichtung (2) beabstandete zusätzliche Aufnahmevorrichtung für den Primärköder (9) angeordnet ist.

13. Künstlicher Angelköder (1) nach einem der vorangehenden Ansprüche, **dadurch gekennzeichnet, daß** die Aufnahmevorrichtung (2) mittels eines fest oder beweglich angebrachten Hakens gebildet wird.

14. Künstlicher Angelköder (1) nach einem der vorangehenden Ansprüche, **dadurch gekennzeichnet, daß** die Aufnahmevorrichtung (2) durch ein Befestigungselement gebildet wird, welches die Anbringung einer separaten Haltevorrichtung für den Primärköder gestattet.

## Claims

1. An artificial fishing lure (1) of the type with a metal head, having:
- a body (10) of a metallic material or a material with a high metal content,
- a line attachment means (3a; 3b) for a fishing line (8) on the back (5) of the body (10),
- an extension (6) formed on the rear of the body (10), which is configured to stabilise a primary lure (9) in a receiving zone, and
- a hook attachment means (4b) formed at the distal end of the extension (6), which is configured to accommodate a hook in exchangeable and freely movable manner, **characterized by**
- a receiving device (2) formed on the body (10) for receiving the primary lure (9) in the receiving zone, the receiving device (2) being configured to hold the primary lure (9) securely on the body (10).

2. The artificial fishing lure (1) according to claim 1, **characterized in that** at least one additional line attachment means (3a) for the fishing line (8), spaced from the line attachment means (3b), is arranged on the back (5) of the body (10).

3. The artificial fishing lure (1) according to claim 1 or claim 2, **characterized in that** the extension (6) extends to the side along the receiving zone for the primary lure (9).

4. The artificial fishing lure (1) according to claim 1 or claim 2, **characterized in that** the extension (6) extends through the receiving zone for the primary lure (9).

5. The artificial fishing lure (1) according to any one of the preceding claims, **characterized in that** the hook attachment means (4b) takes the form of an elongate eyelet.

6. The artificial fishing lure (1) according to any one of the preceding claims, **characterized by** an additional hook attachment means (4a).

7. The artificial fishing lure (1) according to any one of the preceding claims, **characterized in that** the extension (6) takes the form of a continuation of the body (10).

8. The artificial fishing lure (1) according to any one of the preceding claims, **characterized in that** cross-sectional areas along a longitudinal direction of the body (10) have an (infinitesimal) centre of mass in the bottom half.

9. The artificial fishing lure (1) according to any one of the preceding claims, **characterized in that** the body (10) is convexly curved in the region of the back (5).

10. The artificial fishing lure (1) according to any one of the preceding claims, **characterized in that** the body (10) has at least in part a surface coating for providing optic, taste and/or sound bite appeal and/or smell appeal.

11. The artificial fishing lure (1) according to any one of the preceding claims, **characterized in that** the body (10) has additional particular features modifying its hydrodynamic properties.

12. The artificial fishing lure (1) according to any one of the preceding claims, **characterized in that** at least one additional receiving device for the primary lure (9), spaced from the receiving device (2), is arranged on the body (10).

13. The artificial fishing lure (1) according to any one of the preceding claims, **characterized in that** the receiving device (2) is formed by a hook fitted in fixed or movable manner.

14. The artificial fishing lure (1) according to any one of the preceding claims, **characterized in that** the receiving device (2) is formed by an attaching element which allows fitting of a separate retaining device for the primary lure.

## Revendications

1. Appât de pêche synthétique (1) de type tête métallique, avec :
- un corps (10) en un matériau métallique ou un matériau avec une haute teneur en métal,
- un équipement de fixation de fil (3a ; 3b) pour un fil de pêche (8) sur le dos (5) du corps (10),
- une rallonge (6) formée à l'arrière du corps (10), rallonge configurée de manière à stabiliser un appât primaire (9) dans une zone d'accueil, et
- un équipement de fixation de crochet (4b) formé à l'extrémité distale de la rallonge (6), équipement configuré de manière à accueillir un crochet échangeable et librement mobile, **caractérisé par**
- un dispositif d'accueil (2) formé sur le corps (10) pour l'accueil de l'appât primaire (9) dans la zone d'accueil, étant donné que le dispositif d'accueil (2) est configuré de manière maintenir l'appât primaire (9) en toute sécurité sur le corps (10).

2. Appât de pêche synthétique (1) selon la revendication 1, **caractérisé en ce qu'**est disposé sur le dos (5) du corps (10) au moins un équipement de fixation de fil (3a) supplémentaire à une certaine distance de l'équipement de fixation de fil (3b) pour le fil de pêche (8).

3. Appât de pêche synthétique (1) selon la revendication 1 ou 2, **caractérisé en ce que** la rallonge (6) s'étend latéralement le long de la zone d'accueil pour l'appât primaire (9).

4. Appât de pêche synthétique (1) selon la revendication 1 ou 2, **caractérisé en ce que** la rallonge (6) s'étend à travers la zone d'accueil pour l'appât primaire (9).

5. Appât de pêche synthétique (1) selon l'une quelconque des revendications précédentes, **caractérisé en ce que** l'équipement de fixation de crochet (4b) est formé comme oeillet allongé.

6. Appât de pêche synthétique (1) selon l'une quelconque des revendications précédentes, **caractérisé par** un équipement de fixation de crochet (4a) supplémentaire.

7. Appât de pêche synthétique (1) selon l'une quelconque des revendications précédentes, **caractérisé en ce que** la rallonge (6) est formée comme allongement du corps (10).

8. Appât de pêche synthétique (1) selon l'une quelconque des revendications précédentes, **caractérisé en ce que** des surfaces transversales le long d'un sens longitudinal du corps (10) ont un centre de masse (infinitésimal) dans la moitié inférieure.

9. Appât de pêche synthétique (1) selon l'une quelconque des revendications précédentes, **caractérisé en ce que** le corps (10) présente au niveau du dos (5) une courbure convexe.

10. Appât de pêche synthétique (1) selon l'une quelconque des revendications précédentes, **caractérisé en ce que** le corps (10) présente au moins partiellement un revêtement de surface pour la formation d'une stimulation optique, d'une stimulation du goût et/ou d'une stimulation acoustique à la morsure et/ou d'une simulation de l'odorat.

11. Appât de pêche synthétique (1) selon l'une quelconque des revendications précédentes, **caractérisé en ce que** le corps (10) dispose d'empreintes supplémentaires qui en modifient les propriétés hydrodynamiques.

12. Appât de pêche synthétique (1) selon l'une quelconque des revendications précédentes, **caractérisé en ce qu'**est disposé sur le corps (10) au moins un dispositif d'accueil supplémentaire, à une certaine distance du dispositif d'accueil (2), pour l'appât primaire (9).

13. Appât de pêche synthétique (1) selon l'une quelconque des revendications précédentes, **caractérisé en ce que** la dispositif d'accueil (2) est formé au moyen d'un crochet fixe ou installé de façon à être mobile.

14. Appât de pêche synthétique (1) selon l'une quelconque des revendications précédentes, **caractérisé en ce que** le dispositif d'accueil (2) est formé par un élément de fixation qui permet l'installation d'un dispositif de maintien séparé pour l'appât primaire.
